# EUROPÄISCHE PATENTSCHRIFT

(11) **EP 1 972 907 B1**
(45) Veröffentlichungstag und Bekanntmachung des Hinweises auf die Patenterteilung: **19.10.2016**
(21) Anmeldenummer: 07104592.6
(22) Anmeldetag: 21.03.2007
(51) Int. Cl.: G01G 21/18, G01G 21/22

(54) **Plattform für eine Waage**
Platform for a weighing device
Plate-forme pour une balance

(43) Veröffentlichungstag der Anmeldung: 24.09.2008
(73) Patentinhaber: Mettler-Toledo GmbH, 8606 Greifensee (CH)
(72) Erfinder: Zeiss, Siegfried, 8633, Wolfhausen (CH); Rotach, Hansjoerg, 8307, Effretikon (CH)
(74) Vertreter: Mettler-Toledo

(56) Entgegenhaltungen:
- EP-A2- 0 290 880
- DE-A1- 10 032 398
- JP-A- 2006 046 912

## Beschreibung

Die Erfindung betrifft eine einstückig aus einem Metallblech gefertigte Plattform, einen Halter, in den die Plattform einsteckbar ist, ein Verfahren zur Herstellung der Plattform, sowie die Verwendung von mindestens zwei Plattformen und zwei Haltern in einem Wägelift für eine automatisierte Waage.

Prinzipiell ist eine Vielzahl von Plattformen für unterschiedliche Waagentypen bekannt, deren Formen häufig an das jeweilige Einsatzgebiet, das Wägegut und/oder die verwendete Waage angepasst sind. Als Plattform wird hier sowohl eine mit einem Kraftmesssystem der Waage in Kraftkontakt stehende Wägeplattform oder Waagschale, als auch eine mit einer Transfervorrichtung verbundene Transferplattform oder Auflagevorrichtung zum Transport des Wägeguts zur oder von der Wägeplattform verstanden. Auf derartigen Plattformen sind Wägegüter während des Wiegens oder des Transfers von oder zur Wägeplattform angeordnet. Das Zusammenwirken einer Wägeplattform und einer Transferplattform wird beispielsweise in einem Wägelift für eine automatisierbare Waage genutzt.

Die Anforderungen an die Ausgestaltung der Waage und auch der Plattform steigen ständig, insbesondere in Einsatzgebieten mit strengen gesetzlichen Vorlagen, wie zum Beispiel in der Medizin, der Biochemie oder der Pharmazie. Zu diesen Anforderungen zählt beispielsweise das leichte Reinigen der mit einem Wägegut in Kontakt kommenden Teile der Waage, insbesondere der Plattform. Zur Reinigung wird die Plattform in der Regel aus der Waage ausgebaut, separat gereinigt, getrocknet und wieder eingebaut. Dabei soll die Plattform nicht nur physikalisch und/oder chemisch von Rückständen befreit und gereinigt werden, sondern gegebenenfalls auch sterilisiert werden, so dass sie.zumindest den gesetzlich geforderten Hygieneanforderungen genügt.

Der manuelle oder automatisierte Aus- bzw. Einbau der Plattform, insbesondere der Wägeplattform, kann vor allem bei Waagen mit sehr hoher Auflösung, den sogenannten Mikrowaagen, problematisch sein, da bereits ein unbeabsichtigtes Verkanten der Wägeplattform beim Aus- oder Einbau zu einer Beschädigung der Wägemechanik führen kann.

Das gewünschte leichte Reinigen einer Plattform bedingt somit die Forderung nach einem einfachen und problemlosen Aus- und Einbau der Plattform in eine Waage. Ein Austausch der Plattform sollte selbstverständlich ohne Qualitätsverluste in Bezug auf das Messergebnis durchführbar sein, also weder die Plattform noch die Wägemechanik beeinflussen oder beschädigen.

In der JP 2006-046912 A wird eine tellerförmige Waagschale offenbart, die über einen in Lastrichtung befestigen Stiel in einen mit der Wägezelle in Kraftkontakt stehenden Halter eingesetzt werden kann. Der Stiel weist zwei federnde Elemente mit endständigen Eingreifmitteln auf. Zum Einsetzen in den Halter werden die federnden Elemente zusammengedrückt. Bei nachlassendem Druck auf die federnden Elemente, spreizen sich diese wieder und pressen den Stiel in den Halter. Zusätzlich rasten die Eingreifmittel in Ausbuchtungen im Halter zur Fixierung der Waagschale ein. Zum Lösen der Verbindung werden die aus dem Halter herausragenden Eingreifmittel leicht zusammengedrückt. Derartige Waagschalen können nur eingesetzt werden, wenn der Halter in Lastrichtung und entgegen der Lastrichtung zugänglich ist. Dieses ist bei Mikröwaagen oder kompakt ausgestalteten Wägeliften in der Regel nicht gegeben, zudem wäre das Fräsen der Waagschale aus einem Materialblock zeit- und kostenintensiv, insbesondere, da die federnden Elemente stabil sein müssen, um einen regelmässigen Austausch der Waagschale zu ermöglich, was zu einem relativ hohen Gewicht der Waagschale führen kann.

Bekannte Plattformen und insbesondere solche die in automatisierbaren Waagen eingesetzt werden, bestehen in der Regel aus mehreren Teilen, wodurch die Herstellung einer vollkommen spaltfreien Plattform kaum möglich ist. Das hat neben hohen Fertigungskosten den Nachteil, dass die Plattform nach einer Reinigung sehr lange getrocknet werden muss, um sicherzustellen, dass alle Reinigungsflüssigkeiten aus den Spalten vertrieben worden sind. Dies ist notwendig, da insbesondere bei Mikrowaagen bereits kleinste Mengen, also auch mögliche Rückstände, gemessen werden und das Messergebnis verfälschen können. Zudem sind diese Plattformen relativ anfällig gegenüber mechanischer Fehlbelastung und müssen sehr sorgfältig gehandhabt werden.

Damit ergibt sich als Aufgabe die Bereitstellung einer Plattform für elektronische Waagen, insbesondere für automatisierbare Waagen, welche leicht zu reinigen ist und einfach ausgetauscht werden kann.

Diese Aufgabe wird durch eine Plattform für eine elektronische Waage gelöst. Die Plattform weist eine Auflage für ein Wägegut, einen Zentrierstift und einen Verdrehschutz auf, welcher zwischen der Auflage und dem Zentrierstift angeordnet ist. Weiterhin ist die Plattform einstückig aus einem Metallblech gefertigt und in einen Halter im Wesentlichen spielfrei einsteckbar.

Der Halter weist eine endständige erste Kupplungsstelle mit einer keilförmigen Nut zur Aufnahme des Verdrehschutzes und einen Körper auf, wobei im Körper des Halters eine Aufnahme für den Zentrierstift zur Positionierung der Plattform parallel zur Lastrichtung ausgebildet ist.

Die Auflage der Plattform kann ein Wägegut aufnehmen, so dass die Lastrichtung als die Richtung definiert wird, in der die Gewichtskraft des Wägeguts wirkt. Die Plattform ist insbesondere auf Grund ihrer einstückigen Ausgestaltung sehr reinigungsfreundlich. Zusammengesteckt können die Plattform und der Halter im Wesentlichen spielfrei miteinander verbunden werden.

Die Plattform kann durch die Ausrichtung des Zentrierstifts in der Aufnahme des Halters parallel zur Lastrichtung ausgerichtet und zentriert werden, so dass auch geringe Lasten mit hoher Präzision bestimmt werden können, wenn die Plattform mit einem in der Waage angeordneten Kraftmesssystem in Kraftkontakt steht. Zudem können Plattform und Halter einfach und insbesondere ohne Verkanten voneinander getrennt werden. Weiterhin kann die Plattform auch gegen eine andere Plattform ausgetauscht werden. In sensiblen Bereichen wäre es sogar denkbar, dass die Plattform ein Einwegbauteil darstellt, welches für jedes Wägegut oder nach einer bestimmten Einsatzdauer ausgetauscht wird.

Weiterhin weist die Plattform ein Führungselement auf, welches einerseits die Plattform in einer Ebene senkrecht zur Lastrichtung stabilisiert und andererseits beim Zusammenstecken oder Trennen von Plattform und Halter die Bewegungen der beiden Bauteile zueinander führt oder lenkt.

Die Auflage der Plattform ist mit einem parallel zur Lastrichtung angeordneten Dorn verbunden. Dieser Dorn weist sowohl den Zentrierstift, den Verdrehschutz als auch das Führungselement auf und ist der Teil der Plattform, welcher in den Halter eiristeckbar ist. Die Ausgestaltung des Dorns dient der Ausrichtung, Zentrierung und Stabilisierung der Plattform im Halter parallel zur Lastrichtung ebenso wie dem verkantungsfreien Zusammenstecken oder Trennen dieser beiden Bauteile.

Die Ausgestaltung des Dorns umfasst die Anordnung des Führungselements zwischen dem Verdrehschutz und dem Zentrierstift. Vorzugsweise sind der Verdrehschutz, der Zentrierstift und das Führungselement durch eine stielartige Verlängerung miteinander verbunden.

Der Verdrehschutz kann ein im Wesentlichen flaches, beispielsweise rechteckiges Element sein, welches so im Halter angeordnet werden kann, dass die plattform zumindest in einer Ebene senkrecht zur Lastrichtung im Wesentlichen spielfrei gelagert wird. Der Verdrehschutz weist senkrecht zur Lastrichtung eine grössere Ausdehnung als der Zentrierstift und das Führungselement auf. Das Führungselement wiederum weist senkrecht zur Lastrichtung eine grössere Ausdehnung als der Zentrierstift auf, wobei die Ausdehnungsrichtung der des Verdrehschutzes entspricht.

Der Zentrierstift kann als Vierkant ausgestaltet sein, dessen Kantenlängen im Wesentlichen der Materialstärke des zur Herstellung der Plattform verwendeten Metallblechs entspricht.

Der Verdrehschutz dient dazu die Plattform sowohl in einer Ebene senkrecht zur Lastrichtung und zur Ausdehnungsrichtung des Verdrehschutzes vor dem Verkippen zu schützen, als auch die Plattform gegen die Einwirkung von Rotationskräften und damit das Verdrehen zu schützen.

Die Auflage der Plattform kann zur Mehrpunktlagerung des Wägeguts mindestens zwei Ausleger aufweisen, welche beispielsweise ähnlich wie die Zinken einer Gabel geformt sein können oder eine Art Spinne bilden können, deren mindestens drei Ausleger jeweils an einem Ende im Wesentlichen punktförmig mit dem Dorn verbunden sind.

Weiterhin kann die Plattform eine Auflage aufweisen, welche zur flächigen Abstützung des Wägeguts ausgestaltet ist, indem sie beispielsweise einen vorzugsweise durchbrochenen Wägeteller bildet. Eine solche Plattform kann einen mittig oder azentrisch angeordneten Dorn zum Einstecken in einen Halter aufweisen. Die durchbrochene Ausgestaltung der Plattform dient insbesondere der Gewichtsreduktion und/oder kann durch den Herstellprozess bedingt sein.

Die Auflage kann auch individuell an das zu bestimmende Wägegut angepasst werden. Für eine Wägung kann das Wägegut direkt auf der Auflage angeordnet werden oder bei sehr kleinen Wägegüter kann ein Hilfsmittel, zum Beispiel ein Gefäss, verwendet werden, dessen Gewicht zuvor ermittelt und anschliessend vom ermittelten Gesamtgewicht abgezogen wird.

Plattformen für elektronische Waagen können aus unterschiedlichen Metallblechen hergestellt werden, wobei sich insbesondere Metalle wie rostfreie Stähle, Edelmetalle, Aluminium oder Titan sowie Kombinationen daraus eignen. Prinzipiell kann die Plattform aus allen Metallen hergestellt werden, aus denen Metallbleche gefertigt werden können. Weiterhin wäre es auch denkbar, die Plattformen in einem weiteren Arbeitsschritt zu beschichten.

Ein weiterer Aspekt der Erfindung betrifft einen mit einer Plattform zusammenwirkenden Halter, in den die Plattform, welche eine Auflage für ein Wägegut und einen Verdrehschutz aufweist, im Wesentlichen spielfrei einsteckbar ist. Der Halter weist eine endständige erste Kupplungsstelle, in der eine keilförmige Nut zur Positionierung der Plattform parallel zur Lastrichtung ausgebildet ist, und einen Körper auf, in welchem eine Aufnahme für einen Zentrierstift einer aus einem Metallblech einstückig gefertigten Plattform ausgebildet ist.

Die keilförmige Nut dient dazu, die Plattform und insbesondere den Verdrehschutz in einer Ebene senkrecht zur Lastrichtung abzustützen, indem eine Seite des Verdrehschutzes flächig an eine die Nut begrenzende, parallel zur Lastrichtung ausgerichtete Fläche anstösst und die andere Seite gegen eine durch eine die Nut begrenzende abgeschrägte Fläche gebildete Kante anstösst.

Die Dimensionen des Halters können an die der Plattform und insbesondere des Dorns angepasst werden. In einer Ausgestaltung kann der Körper des Halters einen kleineren äusseren Querschnitt aufweisen als die erste Kupplungsstelle.

Weiterhin kann der Halter eine zweite endständige Kupplungsstelle aufweisen, welche zur Verbindung des Halters mit einem in einer Waage angeordnetem Kraftmesssystem oder mit einer Transfervorrichtung dient. Bevorzugt ist eine lösbare Verbindung des Halters mit dem Kraftmesssystem oder der Transfervorrichtung, so dass auch der Halter unabhängig von der Plattform oder der Waage gereinigt werden kann. Die Ausgestaltung der zweiten Kupplungsstelle sollte insbesondere an die Verbindungsstelle des Kraftmesssystems oder der Transfereinrichtung angepasst sein.

Der Körper des Halters und die erste Kupplungsstelle können eine Aussparung zur Aufnahme eines Führungselements der Plattform aufweisen. Der Durchmesser dieser Aussparung entspricht im Wesentlichen der Ausdehnung des Führungselements senkrecht zur Lastrichtung.

Die Aussparung erstreckt sich zumindest im Inneren der erste Kupplungsstelle und eines Teils des Halters. In Lastrichtung verjüngt sie sich zu einer Aufnahme für den Zentrierstift der Plattform, wobei diese Aufnahme von der ersten Kupplungsstelle beabstandet angeordnet ist und so ausgestaltet ist, dass die Aufnahme im Wesentlichen spielfrei mit dem Zentrierstift zusammenwirken kann, wenn die Plattform in den Halter eingesteckt ist.

Die Ausdehnung der Aussparung parallel zur Lastrichtung entspricht zumindest der Ausdehnung des Dorns der Plattform parallel zur Lastrichtung, wobei es auch möglich wäre, dass sich die Ausdehnung im Inneren des kompletten Halters erstreckt, so dass dieser einer Hülse mit mehreren inneren Querschnitten ähnelt. Die hülsenartige Ausgestaltung ist vor allem in Bezug auf ein möglichst geringes Gewicht des Halters vorteilhaft.

Die keilförmige Nut, welche mit dem Verdrehschutz zusammenwirken kann, kann sich über den Durchmesser der ersten Kupplungsstelle erstrecken, wodurch diese endständig in zwei Abschnitte geteilt wird. Die Nut weist somit zwei Teile auf, welche durch die Aussparung in der ersten Kupplungsstelle unterbrochen werden.

Die beiden Abschnitte der ersten Kupplungsstelle sind vorzugsweise asymmetrisch ausgestaltet, wodurch eine Vorzugsrichtung für die Kupplung mit der Plattform ausgebildet wird. Diese Ausgestaltung des Halters ist insbesondere für Plattformen mit einer mehrere Ausleger umfassenden Auflage oder mit einer flächigen Auflage mit einem azentrischen Dorn vorteilhaft.

Aufgrund der asymmetrisch ausgestalteten Endbereiche können der Zentrierstift in die Aufnahme und der Verdrehschutz in die Nut einrasten, wenn die Plattform richtig eingesetzt wurde. Wird die Plattform verdreht eingesetzt, dann wird das Übergangselement mit einer endständigen Auflagefläche des einen Endbereichs in Kontakt gebracht, bevor der Verdrehschutz oder der Zentrierstift einrasten können. Die plattform hängt bildlich gesprochen in der Luft und wackelt. Eine stabile Verbindung zwischen Plattform und Halter kann nur mit einer korrekt eingesetzten Plattform erreicht werden.

Ein weiterer Aspekt der Erfindung betrifft ein Verfahren zur Herstellung einer erfindungsgemässen einstückigen Plattform mit einer Auflage für ein Wägegut und einen parallel zur Lastrichtung angeordneten Dorn, welcher einen Zentrierstift, einen Verdrehschutz und/oder ein Führungselement aufweist. Der Herstellungsprozess umfasst zunächst die Erzeugung eines flachen Rohlings aus einem Metallblech, aus welchem anschliessend durch geeignetes Biegen eine dreidimensionale Plattform geformt wird.

Diese Art der Herstellung ist sehr viel günstiger als die Herstellung bekannter mehrteiliger Waagschalen und ermöglicht sogar die Massenproduktion der Plattformen. Je nach verwendetem Material kann es notwendig sein, weitere Bearbeitungsschritte, wie beispielsweise beschichten, schleifen oder polieren durchzuführen.

Der Rohling wird vorzugsweise durch Laserschneiden, Stanzen oder Wasserschneiden erzeugt, wodurch sowohl individuelle Plattformen als auch Serien von Plattformen gefertigt werden können.

Besonders vorteilhaft ist die Verwendung einer Wägeplattform, einer Transferplattform, einem ersten Halter und einem zweiten Halter für die Plattformen in einem Wägelift für eine elektronische Waage. Jede Plattform weist eine Auflage, einen Verdrehschutz und einen Zentrierstift auf, wobei die Auflagen vorzugsweise so gestaltet sind, dass die Auflage der Wägeplattform und die der Transferplattform zur Übergabe eines Wägeguts berührungslos durcheinander hindurch greifen können. Weiterhin weist jeder Halter eine endständige erste Kupplungsstelle, in der eine keilförmige Nut zur Positionierung der Plattform parallell zur Lastrichtung ausgebildet ist, und einen Körper, in welchem eine Aufnahme für einen Zentrierstift einer einstückigen Plattform ausgebildet ist, auf. Die Wägeplattform kann über den ersten Halter mit einem in der Waage angeordnetem Kraftmesssystem in Kraftkontakt gebracht werden und die Transferplattform kann über den zweiten Halter mit einer Transfervorrichtung für ein Wägegut verbunden werden.

Die erfindungsgemässe Plattform, der mit dieser kombinierbare Halter und die Verwendung eine Wägeplattform, einer Transferplattform und zweier Halter in einer automatisierbaren Waage werden anhand der folgenden Figuren näher beschirieben, wobei gleiche Elemente mit denselben Bezugszeichen versehen sind. Die Figuren zeigen:
- Fig. 1: Dreidimensionale Ansicht einer erfindungsgemässen Plattform;
- Fig. 2: Seitenansicht der Plattform aus Figur 1;
- Fig. 3: zweidimensionale Ansicht einer Plattform oder eines Rohlings;
- Fig. 4: a) dreidimensionale Teilansicht eines Halters für eine Plattform,
b) Teilansicht des Halters im Schnitt und
c) in der Aufsicht;
- Fig. 5: Teilansicht einer in den Halter aus Figur 4 eingesteckten Plattform
a) im Schnitt entlang der Ebene AB aus Figur 4a,
b) im Schnitt entlang der Ebene AC; Schnitt durch die in den Halter aus Figur 4 eingesteckten Plattform
c) entlang D-D,
d) entlang E-E;
- Fig. 6: a) dreidimensionale Darstellung einer Plattform mit einer weiteren Auflage,
b) zweidimensionale Teildarstellung des Rohlings der Plattform aus Figur 6a;
- Fig. 7: a) dreidimensionale Darstellung einer Plattform mit einer weiteren Auflage,
b) Seitenansicht der Plattform aus Figur 6a;
- Fig. 8: dreidimensionale Darstellung einer Plattform mit einer weiteren Auflage;
- Fig. 9: Aufsicht auf einen Rohling einer Plattform für flache oder scheibenförmige Wägegüter;
- Fig. 10: Aufsicht auf zwei durcheinander greifende Rohlinge;
- Fig. 11: Seitenansicht eines Wägelifts für eine automatisierbare Waage mit einer Wägeplattform und einer Transferplattform im Schnitt.

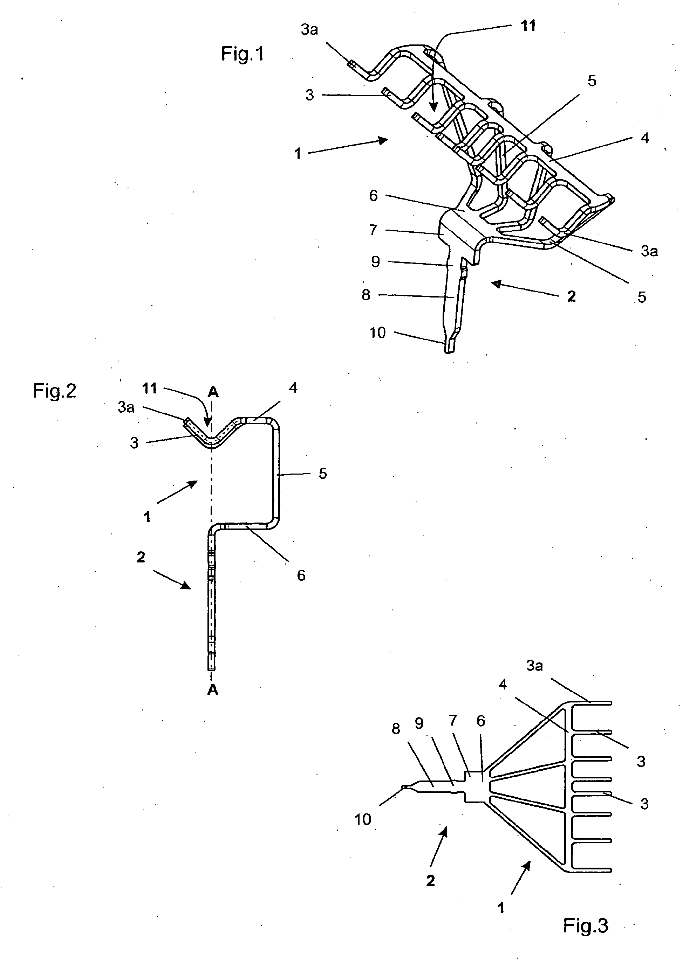

Figur 1 zeigt eine aus einem Metallblech einstückig gefertigte Plattform mit einer Auflage 1 für ein Wägegut, welche in einen Dorn 2 übergeht.

Die Auflage 1 weist an ihrem freien Ende zinkenartige Ausleger 3, 3a auf, welche zueinander beabstandet sind und über die vollständige Breite der Auflage 1 verteilt sind, also senkrecht zur Lastrichtung. Diese Ausleger 3, 3a sind gebogen, so dass sie eine gemeinsame Rinne 11 ausbilden, in welcher ein Wägegut platziert werden kann.

Je nach Länge des Wägeguts liegt dieses auf zwei oder mehr Auslegern 3, 3a auf. Die Ausleger 3, 3a gehen in ein gemeinsames, flächiges Verbindungselement 4 über, dessen Breite im Wesentlichen der vollständigen Breite der Auflage 1 entspricht. Dieses Verbindungselement 4 dient vor allem zur mechanischen Stabilisierung der Ausleger 3, 3a. Die Ausleger 3, 3a können sowohl mit gleichem Abstand voneinander angeordnet als auch wie hier gezeigt mit unterschiedlichen Abständen zueinander angeordnet sein.

Damit die Plattform ein möglichst geringes Eigengewicht aufweist, besteht die Verbindung zwischen dem mit den Auslegern 3, 3a verbundenem Verbindungselement 4 und dem Dorn 2 aus mehreren Streben 5, welche sich hier fächerförmig zwischen dem Dorn 2 und dem Verbindungselement 4 erstrecken. Die Anzahl und Dimension der Streben 5 kann an die Masse der zu wägenden Wägegüter und/oder an die Traglast und Auflösung der Waage angepasst werden, solange die mechanische und strukturelle Stabilität der Plattform gewahrt wird.

Die Streben 5 laufen in einem Übergangselement 6 zusammen, welches in diesem Beispiel senkrecht zur Achse A-A ausgerichtet ist.

Das Übergangselement 6 geht direkt in den Dorn 2 über, welcher einen Verdrehschutz 7, ein Führungselement 9 und einen Zentrierstift 10 aufweist, welche durch eine stielartige Verlängerung 8 miteinander verbunden sind.

Der Verdrehschutz 7 hat hier dieselbe Breite wie das Übergangselement 6. Der Verdrehschutz 7 ist ein flaches, im Wesentlichen rechteckig ausgeprägtes Element, welches mit einer im Halter ausgebildeten Nut zusammenwirken kann.

Am Verdrehschutz 7 ist parallel zur Lastrichtung mittig die stielartige Verlängerung 8 angeordnet, welche bezogen auf die Zeichnung im oberen Drittel das Führungselement 9 in Form von zwei Ausbuchtungen oder Flügeln aufweist, welche sich senkrecht zur Achse A-A erstrecken und der Abstützung der Plattform im Halter in dieser Richtung dienen.

Das freie Ende des Dorns 2 ist als schmaler Zentrierstift 10 ausgestaltet. Der Zentrierstift 10 weist im Wesentlichen die Form eines Vierkants auf, dessen Dimension durch die Stärke des zur Herstellung der Plattform verwendeten Metallblechs vorgegeben wird.

Figur 2 zeigt eine Seitenansicht der Plattform aus Figur 1, in der vor allem die Rinne 11 gut zu erkennen ist, welche durch Biegen der Ausleger 3, 3a erzeugt wird. Damit beispielsweise beim Mehrfachwägen das Wägegut nicht von der Auflage 1 herunterfallen kann, bietet es sich an, die Ausleger 3, 3a unterschiedlich stark zu biegen, so dass beispielsweise die endständigen Ausleger 3a entgegen der Lastrichtung verschoben sind und die durch die innenliegenden Ausleger 3 gebildete Rinne 11 begrenzen (s. Figur 1). Die Rinne 11 und der Dorn 2 sind hier entlang der Achse A-A ausgerichtet ist.

Figur 3 zeigt eine Plattform oder einen Rohling für die Plattform aus Figur 1 in einer zweidimensionalen Ansicht. Der Rohling kann beispielsweise durch Laserschneiden, Stanzen oder Wasserschneiden aus einem flachen Metallblech herausgearbeitet und anschliessen durch Biegen in die in Figur 1 gezeigte dreidimensionale Form überführt werden. Der Rohling weist bereits alle Merkmale der Plattform auf, wobei das Übergangselement 6 und der Verdrehschutz 7 eine strukturelle Einheit bilden, welche erst durch das Biegen des Rohlings in zwei funktionelle Elemente überführt wird, wodurch der Verdrehschutz 7 entlang der Achse A-A (s. Figur 2) und das Übergangselement 6 senkrecht zur Achse A-A angeordnet werden.

Alternativ könnte der in Figur 3 gezeigte Rohling auch direkt als Plattform verwendet werden, wobei das Wägegut auf die Ausleger 3 aufgesetzt oder an diesen angebracht werden könnte.

Die in den Figuren 1 bis 3 gezeigte Plattform kann insbesondere aufgrund der Ausgestaltung des Dorns 2 schnell, einfach und insbesondere verkantungsfrei in einen Halter eingesteckt oder wieder daraus entfernt werden.

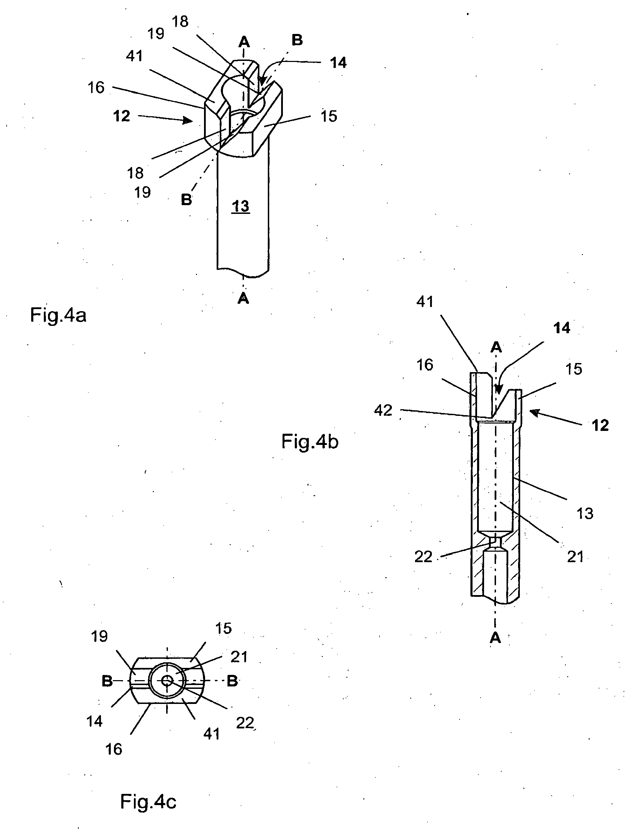

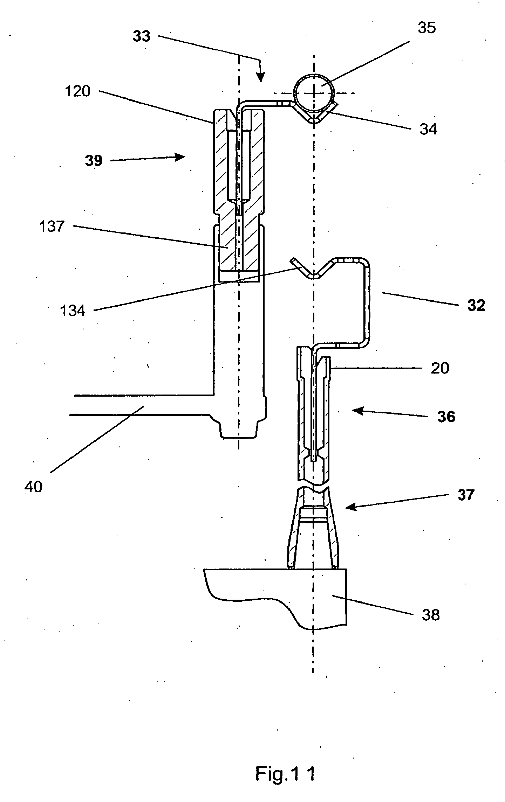

Ein geeigneter Halter für die Plattform wird anhand der Figuren 4a bis 4c näher beschrieben. Die Figuren zeigen jeweils eine Teilansicht des Halters, wobei der Teil gezeigt ist, welcher mit der Plattform, insbesondere dem Dorn, zusammenwirkt. Das hier nicht beschriebene zweite Ende des Halters kann beispielsweise mit einem in einer Waage angeordnetem Kraftmesssystem oder einer Transfervorrichtung verbunden werden (s. a. Figur 11). Die Figuren 4a bis 4c werden im Folgenden im Wesentlichen gemeinsam beschrieben.

Der Halter weist eine endständige erste Kupplungsstelle 12 und einen länglichen, hülsenförmigen Körper 13 auf. Die erste Kupplungsstelle 12 weist eine keilförmige Nut 14 auf, welche sich senkrecht zur Lastrichtung bzw. zur Achse A-A über den kompletten Durchmesser der ersten Kupplungsstelle 12 erstreckt. Die keilförmige Nut 14 teilt die erste Kupplungsstelle 12 in einen ersten Endbereich 15 und einen zweiten Endbereich 16, wobei ein Nutgrund 42 um etwa die halbe Blechdicke des Dorns 2 parallel versetzt zur Achse A-A angeordnet ist, so dass die Mittelachse des Dorns 2 senkrecht zur Achse A-A des Halters ausgerichtet werden kann, bzw. wenn die Plattform als Wägeplattform eingesetzt wird, dass der Dorn 2 parallel zur Lastrichtung ausgerichtet werden kann.

Der Endbereich 16 wird zur Nut 14 hin durch zwei parallel zur Ebene AB ausgebildete Grenzflächen 18 begrenzt und weist an seinem freien Ende eine senkrecht zur Lastrichtung angeordnete Auflagefläche 41 auf. Der Endbereich 15 wird zur Nut 14 hin durch zwei schräg zur Ebene AB ausgerichtete Grenzflächen 19 begrenzt, wodurch die keilförmige Nut 14 gebildet wird.

Weiterhin weist der zweite Endbereich 16 eine im Vergleich zum ersten Endbereich 15 grössere Ausdehnung entlang der Achse A-A auf. Die asymmetrischen Endbereiche 15, 16 geben zusammen mit der Nut 14 und der Auflagefläche 41 eine Richtung für das korrekte Einsetzen der Plattform in Bezug auf die zwischen den Achsen B und C aufgespannte Ebene vor.

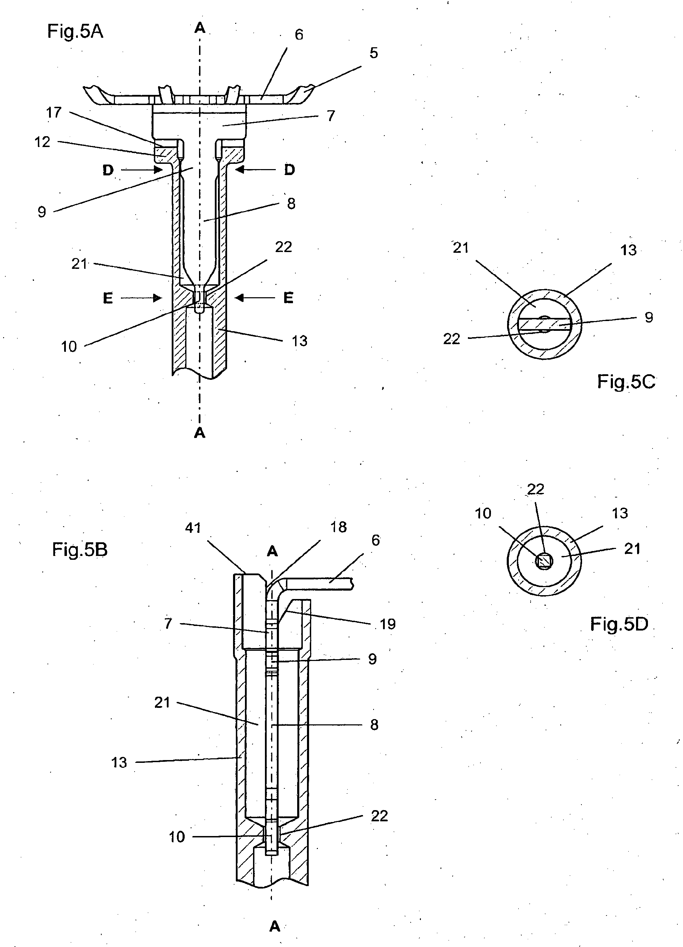

Das Innere des Halters weist entlang der Achse A-A eine Aussparung 21 zur Aufnahme des Dorns der Plattform auf, wie es in Figur 5 gezeigt ist. Der Durchmesser der Aussparung 21 entspricht im Wesentlichen der Breite des Führungselements 9 der Plattform. Allerdings weist die Aussparung 21 im Bereich der ersten Kupplungsstelle 12 einen leicht vergrösserten Durchmesser auf und verjüngt sich bezogen auf die Zeichnung unten zu einer Aufnahme 22 für den Zentrierstift 10. Der Durchmesser und Umfang der Aufnahme 22 sind an die des Zentrierstiftes 10 angepasst, so dass dieser beim Zusammenfügen von Plattform und Halter im Wesentlichen spielfrei in die Aufnahme 22 einrastet.

Die unterschiedlichen Durchmesser der Aussparung 21 sowie der Aufnahme 22 sind in Figur 4c als Aufsicht gezeigt. Diese Darstellung zeigt weiterhin, dass die Aussparung 21 und die Aufnahme 22 mittig im Halter zentriert sind und die Nut 14 leicht parallel versetzt zur Ebene AB angeordnet ist.

Die Figuren 5A bis 5D zeigen Teilansichten einer in einen Halter eingefügten Plattform im Schnitt entlang der Achse A-A und entlang der Achse B-B sowie Schnitte durch den Halter entlang D-D und E-E. Wenn die Plattform in den Halter eingesetzt ist, dann wird der Zentrierstift 10 im Wesentlichen spielfrei in der Aufnahme 22 und der Verkippschutz 9 im Wesentlichen spielfrei in der Aussparung 21 geführt.

Aufgrund der asymmetrisch ausgestalteten Endbereiche 15, 16 kann der Zentrierstift 10 nur in die Aufnahme 22 und der Verdrehschutz 7 in die Nut 14 einrasten, wenn die Plattform richtig in den Halter eingesetzt wurde. Wird die Plattform verdreht eingesetzt, dann wird das Übergangselement 6 mit der endständigen Auflagefläche 41 des zweiten Endbereichs 16 in Kontakt gebracht, bevor der Verdrehschutz 7 oder der Zentrierstift 10 einrasten können. Die Plattform hängt bildlich gesprochen in der Luft und wackelt. Eine stabile Verbindung zwischen Plattform und Halter kann nur mit einer korrekt eingesetzten Plattform erreicht werden.

Der Verdrehschutzes 7 ist in der Nut 14 angeordnet. Im eingesetzten Zustand wird die Plattform und insbesondere der Verdrehschutz 7 senkrecht zur Nut 14 bzw. senkrecht zur Ebene AB einerseits durch die Grenzflächen 18 und andererseits durch die abgeschrägten Grenzflächen 19 abgestützt. Der Verdrehschutzes 7 liegt flächig an den Grenzflächen 18 an und stösst ausserdem an eine Kante der Grenzfläche 19 an. Dadurch kann das Verkippen der Plattform senkrecht zur Ebene AB verhindert werden und die Plattform parallel zur Lastrichtung ausgerichtet werden.

Die stielartige Verlängerung 8 der Plattform ist vollständig in der Aussparung 21 angeordnet, das Führungselement 9 befindet sich in Kontakt mit der Innenwand der Aussparung 21 und wird im Wesentlichen spielfrei in der Aussparung 21 geführt. Das Führungselement 9 ist im eingesetzten Zustand der Plattform, in Bezug auf die Zeichnung etwas unterhalb der ersten Kupplungsstelle 12 angeordnet.

Aufgrund von Fertigungstoleranzen kann eine beidseitige Auflage der in Bezug auf die Zeichnung unteren Kante des Verdrehschutzes 7 in der Nut 14 und insbesondere auf den Auflageflächen 17 der Nut 14 nicht permanent gewährleistet werden. Das Führungselement 9 ermöglicht daher die parallel zur Lastrichtung gerade und passgenaue Ausrichtung der Plattform im Halter, welche durch den Verdrehschutz 7 und die Nut 14 alleine nicht gegeben wäre.

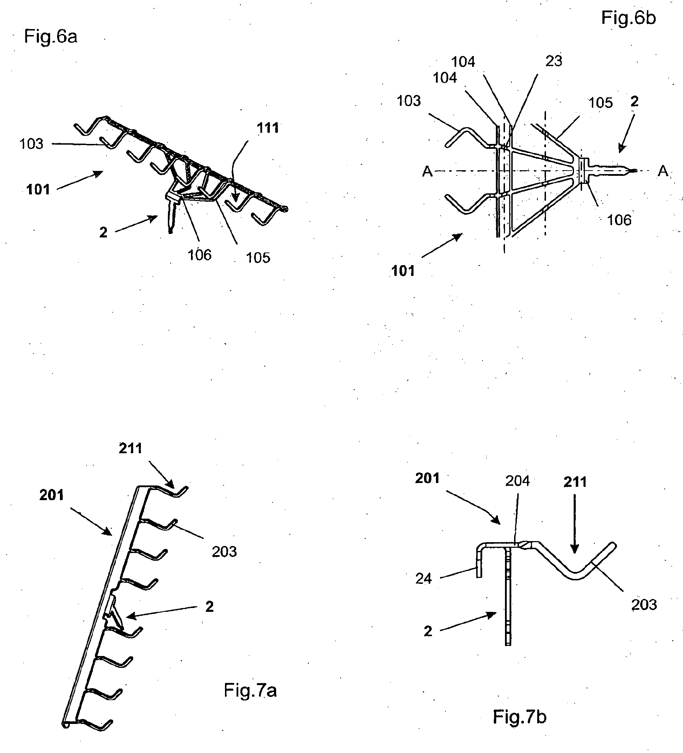

Eine erfindungsgemässe Plattform kann verschiedenartige Auflagen aufweisen, welche mit einem im Wesentlichen gleichförmigen Dorn verbunden sind. Beispielhaft sind in den Figuren 6 bis 10 verschiedene Ausgestaltungen einer erfindungsgemässen Plattform dargestellt, wobei selbstverständlich weitere Plattformen für spezielle Anwendungen, Waagen oder Wägegüter hergestellt werden können, welche über einen Dorn mit einem erfindungsgemässen Halter koppelbar sind. Der Dorn ist für alle Plattformen im Wesentlichen gleich, für eine genauere Beschreibung wird daher auf die Figuren 1 bis 5 verwiesen.

Die Figuren 6a und 6b zeigen eine dreidimensionale Darstellung einer aus einem Metallblech einstückig gefertigten Plattform bzw. eine Teilansicht deren Rohlings in der Aufsicht. Die gezeigte Plattform weist einen Dorn 2 auf, welcher mit einer Auflage 101 verbunden ist. Die Auflage 101 umfasst ein senkrecht zum Dorn 2 angeordnetes Übergangselement 106, welches über mehrere fächerförmig angeordnete Streben 105 mit zwei parallel zueinander und senkrecht zur Lastrichtung angeordneten Verbindungselementen 104 verbunden ist. Der Ersatz des einen Verbindungselements 4 (s. Figur 1) gegen zwei schmalere, parallel zueinander angeordnete und miteinander über Stege verbundene Verbindungselemente 104 dient vor allem dazu, das Gesamtgewicht der Plattform zu reduzieren. Eine derartige Ausgestaltung bietet sich insbesondere bei grösseren Plattformen an.

Weiterhin umfasst die Auflage 101 mehrere zinkenartige Ausleger 103, welche so gebogen und gedreht wurden, dass sie eine gemeinsame Rinne 111 zur Aufnahme eines Wägeguts ausbilden. Die Ausleger 103 werden, wie es anhand des Rohlings in Figur 6b zu erkennen ist, bei der Herstellung der Plattform nicht nur gebogen sondern auch an ihrem mit dem Verbindungselement 104 verbundenen Ende verdreht. Dieses geschieht vor allem aus produktionstechnischen Überlegungen heraus.

Die in den Figuren 7a und 7b dreidimensional und als Seitenansicht gezeigte Plattform weist eine etwas andere Form einer Auflage 201 auf. Zudem ist der Dorn 2 im Rohling (hier nicht gezeigt) mittig zwischen den Auslegern 203 angeordnet und wird dann, wie auf der Zeichnung zu erkennen ist, nach unten bzw. parallel zur Lastrichtung gebogen, während aus den Auslegern 203 wie bereits anhand der Figuren 6a und 6b erläutert durch Biegen und Drehen eine gemeinsame Rinne 211 gebildet wird. Die Ausleger 203 und der Dorn 2 sind direkt mit einem einteiligen Verbindungselement 204 verbunden, welches zur Stabilisierung und besseren Gewichtsverteilung der Plattform auf der den Auslegern 203 entgegengesetzten Seite mit einer parallel zur Lastrichtung weisenden Stabilisierung 24 verbunden ist, welche im Wesentlichen eine Art abgebogene Verlängerung des Verbindungselements 204 darstellt.

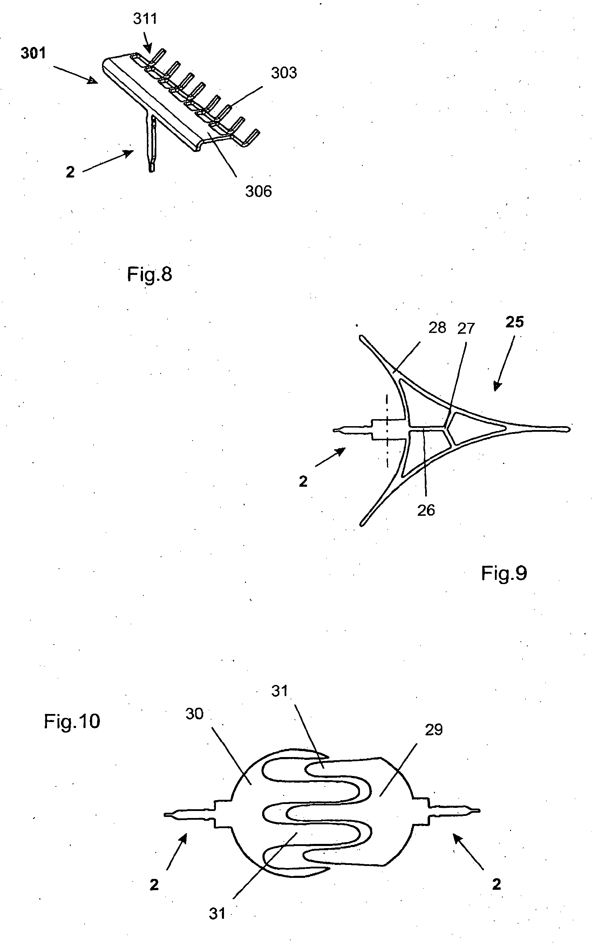

Figur 8 zeigt eine dreidimensionale Darstellung einer weiteren Plattform, bei der der Dorn 2 und mehrere Ausleger 303 direkt mit einem Verbindungselement 306 verbunden sind.

Figur 9 zeigt einen Rohling für eine Plattform für scheibenförmige und/oder flache Wägegüter in der Aufsicht. Der Dorn 2 ist mit einer Auflage 25 verbunden. Diese Plattform wird derart mit einer Halter verbunden, dass der Massenschwerpunkt 27 der Auflage 25 azentrisch zum Lastaufnehmer des Kraftmesssystems angeordnet ist. Der Massenschwerpunkt 27 liegt etwa im Schnittpunkt der drei inneren Streben 26, welche aussen durch drei äussere Streben 28 begrenzt werden, welche im Wesentlichen ein Dreieck mit nach innen gewölbten Kanten bilden.

Figur 10 zeigt die Rohlinge für zwei durcheinander hindurch greifende Plattformen. Jede Plattform weist einen Dorn 2 und eine Auflage 29, 30 auf. Die Auflagen 29, 30 entsprechen im Wesentlichen Kreissegmenten mit fingerförmigen Auslegern 31, welche derart angeordnet sind, dass die beiden Plattformen berührungslos durcheinander hindurch greifen können. Zur Fertigstellung der Plattformen, wird nur der Dorn 2 der Rohlinge senkrecht zur jeweiligen Auflage 29, 30 gebogen. Die Auflage 29, 30 wird, wenn die Plattform in einen Halter eingesteckt ist, in einer Ebene senkrecht zur Lastrichtung ausgerichtet. Derartige Plattformen können als Wäge- und Transferplattform in einem Wägelift für zum Beispiel einen Massenkomparator eingesetzt werden.

Figur 11 zeigt die Verwendung zweier erfindungsgemässer Plattformen und zweier Halter als Wägeplattform 32 und Transferplattform 33 in einem Wägelift. Die beiden Plattformen 32, 33 weisen durcheinander hindurch greifende Auflagen 34, 134 auf, welche relativ zueinander entlang der Achse A-A bewegt werden können, so dass ein hier auf der Transferplattform 33 aufliegendes Wägegut 35 auf die Wägeplattform transferiert und nach einer Wägung wieder entfernt werden kann, wobei die Auflage 34, 134 berührungslos durcheinander hindurch greifen.

Die Wägeplattform 32 ist über eine erste Kupplungsstelle 20 in einen Halter 36 eingesteckt, welcher über eine zweite endständige Kupplungsstelle 37 mit einem Kraftmesssystem 38, zum Beispiel einer Wägezelle, verbunden ist. Derartige Verbindungen zwischen Kraftmesssystem 38 und einem Halter 36 sind bekannt und werden daher nicht näher beschrieben. Der Halter 36 kann sowohl einteilig als auch mehrteilig ausgestaltet sein.

Die Transferplattform 33 ist über eine erste Kupplungsstelle 120 in einen Halter 39 eingesteckt, welcher über seine zweite Kupplungsstelle 137 im Wesentlichen spielfrei mit der Transfervorrichtung 40 verbunden ist, wobei die Verbindung sowohl fest als auch lösbar ausgestaltet sein kann. Die Halter 33, 36 können sowohl einteilig als auch mehrteilig ausgestaltet sein.

Ein so aufgebauter Wägelift hat den Vorteil, dass nach einer Wägung oder in vom Anwender vorgegebenen zeitlichen Abständen die Plattformen 32, 33 einfach entfernt, gereinigt und wieder eingesetzt werden können. Als Plattform 32, 33 können beispielsweise die in den Figuren 1 bis 3, 6 bis 8 und 10 beschriebenen Plattformen verwendet werden. Für eine einfache Reinigung und schnelle Trocknung ist vor allem das Zusammenspiel zwischen Dorn und Halter sowie die einstückige Ausgestaltung der Plattformen wichtig.

Die beschriebenen Auflagen der Plattformen stellen nur einen Teil der möglichen Auflagen da. Selbstverständlich kann eine erfindungsgemässe Plattform auch weitere Auflagen aufweisen.

**Bezugszeichenliste**

| | | | |
|---|---|---|---|
| 1, 101, 201, 301 | Auflage | 31 | Ausleger |
| 2 | Dorn | 32 | Wägeplattform |
| 3, 3a, 103, 203, 303 | Ausleger | 33 | Transferplattform |
| 4, 104 | Verbindungselement | 34, 134 | Auflage |
| 5, 105 | Strebe | 35 | Wägegut |
| 6, 106, 206, 306 | Übergangselement | 36 | Halter |
| 7 | Verdrehschutz | 37, 137 | zweite Kupplungsstelle |
| 8 | Verlängerung | 38 | Kraftmesssystem |
| 9 | Führungselement | 39 | Halter |
| 10 | Zentrierstift | 40 | Transfervorrichtung |
| 11, 111, 211, 311 | Rinne | 41 | Auflagerfläche |
| 12 | erste Kupplungsstelle | 42 | Nutgrund |
| 13 | Körper des Halters | | |
| 14 | Nut | | |
| 15 | erster Endbereich | | |
| 16 | zweiter Endbereich | | |
| 17 | Auflagestelle | | |
| 18 | Grenzfläche | | |
| 19 | Grenzfläche | | |
| 20, 120 | erste Kupplungsstelle | | |
| 21 | Aussparung | | |
| 22 | Aufnahme | | |
| 23 | Steg | | |
| 24 | Stabilisierung | | |
| 25 | Auflage | | |
| 26 | Strebe | | |
| 27 | Massenschwerpunkt | | |
| 28 | Strebe | | |
| 29 | Auflage | | |
| 30 | Auflage | | |

## Patentansprüche

1. Plattform für eine elektronische Waage, wobei die Plattform eine Auflage (1) für ein Wägegut aufweist, **dadurch gekennzeichnet, dass** die Plattform zudem einen Zentrierstift (10) und einen Verdrehschutz (7) aufweist, welcher Verdrehschutz (7) zwischen der Auflage (1) und dem Zentrierstift (10) angeordnet ist, wobei die Plattform einstückig aus einem Metallblech gefertigt ist und in einen Halter im Wesentlichen spielfrei einsteckbar ist.

2. Plattform nach Anspruch 1, **dadurch gekennzeichnet, dass** die Plattform ein Führungselement (9) aufweist, welches zwischen dem Verdrehschutz (7) und dem Zentrierstift (10) angeordnet ist.

3. Plattform nach Anspruch 2, **dadurch gekennzeichnet, dass** der Verdrehschutz.(7) senkrecht zur Lastrichtung eine grössere Ausdehnung aufweist als der Zentrierstift (10) und das Führungselement (9).

4. Plattform nach einem der Ansprüche 1 bis 3, **dadurch gekennzeichnet, dass** die Auflage (1) mindestens zwei Ausleger (3) zur Mehrpunklagerung des Wägeguts aufweist.

5. Plattform nach einem der Ansprüche 1 bis 3, dadurch gekenntzeichnet, dass die Auflage (25, 29,30) für eine flächige Abstützung des Wägeguts ausgestattet ist.

6. Plattform nach einem der Ansprüche 1 bis 5, **dadurch gekennzeichnet, dass** die Plattform ein Metall wie einen rostfreien Edelstahl, ein Edelmetall, Titan, Aluminium oder eine Kombination dieser Materialien aufweist.

7. Halter für eine Plattform eine endständige erste Kupplungsstelle (12) und einen Körper (13) aufweisend, **dadurch gekennzeichnet, dass** in der erste Kupplungsstelle (12) eine keilförmige Nut (14) zur Positionierung der Plattform in Bezug auf die Lastrichtung ausgebildet ist, und dass im Körper (13) eine Aufnahme (20) für einen Zentrierstift (10) einer Plattform ausgebildet ist, wobei die Plattform, im Wesentlichen spielfrei in den Halter einsteckbar ist.

8. Halter nach Anspruch 7, **dadurch gekennzeichnet, dass** der Halter eine zweite endständige Kupplungsstelle (37, 137) zur Verbindung mit einem in einer Waage angeordnetem Kraftmesssystem (38) oder zur Verbindung mit einer Transfervorrichtung (40) aufweist.

9. Halter nach einem der Ansprüche 7 oder 8, **dadurch gekennzeichnet, dass** der Körper (13) und die erste Kupplungsstelle (12) eine Aussparung (21) zur Aufnahme eines Führungselements (9) der Plattform aufweisen, wobei der Durchmesser der Aussparung (21) im Wesentlichen der Ausdehnung des Führungselements (9) senkrecht zur Lastrichtung entspricht.

10. Halter nach einem der Ansprüche 7 bis 9, **dadurch gekennzeichnet, dass** sich die keilförmige Nut (14) über den Durchmesser der ersten Kupplungsstelle (12) erstreckt und die erste Kupplungsstelle (12) endständig in zwei Endbereich (15,16) teilt, wobei der Verdrehschutz (7) in die Nut (14) einsteckbar ist.

11. Halter nach einem der Ansprüche 7 bis 10, **dadurch gekennzeichnet, dass** die beiden Endbereiche (15, 16) der ersten Kupplungsstelle (12) asymmetrisch ausgestaltet sind, wodurch eine Vorzugsrichtung für das Einstecken der Plattform festgelegt wird.

12. Verfahren zur Herstellung einer einstückigen Plattform mit einer Auflage (1) für ein Wägegut und einem parallel zur Lastrichtung angeordneten Dorn (2), welcher einen Zentrierstift (10), einen Verdrehschutz (7) und/oder ein Führungselement (9) aufweist, **dadurch gekennzeichnet, dass** aus einem Metallblech ein flacher Rohling erzeugt wird und aus diesem durch anschliessendes Biegen eine dreidimensionale Plattform geformt wird.

13. Verfahren nach Anspruch 12, **dadurch gekennzeichnet, dass** der Rohling durch Laserschneiden, Stanzen oder Wasserschneiden erzeugt wird.

14. Verwendung von einer Wägeplattform (32), einer Transferplattform (39), einem ersten Halter (36) und einem zweiten Halter (39) für die Plattformen in einem Wägelift für eine elektronische Waage, wobei die Plattformen jeweils eine Auflage (1), einen Verdrehschutz (7) und einen Zentrierstift (10) aufweisen, und wobei beide Halter (36, 39) eine endständige erste Kupplungsstelle (12), in der eine keilförmige Nut (14) zur Positionierung der Plattform in Bezug auf die Lastrichtung ausgebildet ist, und einem Körper (13), in welchem eine Aufnahme (20) für einen Zentrierstift (10) einer einstückigen Plattform ausgebildet ist, aufweisen, **dadurch gekennzeichnet, dass** die Wägeplattform (32) über den ersten Halter (36) mit einem in der Waage angeordnetem Kraftmesssystem (38) in Kraftkontakt steht und dass die Transferplattform (39) über den zweiten Halter (39) mit einer Transfervorrichtung (40) für ein Wägegut verbunden ist, und dass die Wägeauflage (32) und die Transferauflage (39) durcheinander hindurch greifbar ausgestaltet sind.

## Claims

1. Platform for an electronic balance, wherein the platform comprises a load-receiving area (1) for a weighing object, **characterized in that** the platform further comprises a centering pin (10) and a rotation-blocking element (7), said rotation-blocking element (7) being arranged between the load-receiving area (1) and the centering pin (10), wherein the platform is made in one piece out of a sheet metal material and can be plugged into a holder substantially without loose play.

2. Platform according to claim 1, **characterized in that** the platform comprises a guide element (9) which is arranged between the rotation-blocking element (7) and the centering pin (10).

3. Platform according to claim 2, **characterized in that** the rotation-blocking element (7) has a larger dimension perpendicular to the direction of the load than the centering pin (10) and the guide element (9).

4. Platform according to one of the claims 1 to 3, **characterized in that** the load-receiving area (1) comprises at least two extremities (3) serving to support the weighing object at a plurality of points.

5. Platform according to one of the claims 1 to 3, **characterized in that** the load-receiving area (25, 29, 30) is configured to support the weighing object over a contact surface area.

6. Platform according to one of the claims 1 to 5, **characterized in that** the platform comprises a metal such as a stainless steel, a noble metal, titanium, aluminum, or a combination of these materials.

7. Holder for a platform, comprising a first coupling portion (12) arranged at one end and further comprising a body (13), **characterized in that** in the first coupling portion (12) a wedge-shaped groove (14) is formed for the positioning of the platform in relation to the load direction, and that in the body (13) a receiving seat (20) is formed for a centering pin (10) of a platform, wherein the platform can be plugged into a holder substantially without loose play.

8. Holder according to claim 7, **characterized in that** the holder comprises a second coupling portion (37, 137) arranged at one end serving for the connection to a force-measuring system (38) arranged in a balance or for the connection to a transfer device (40).

9. Holder according to one of the claims 7 or 8, **characterized in that** the body (13) and the first coupling portion (12) have a hollow space (21) serving to receive a guide element (9) of the platform, wherein the diameter of the hollow space (21) substantially equals the dimension of the guide element (9) perpendicular to the direction of the load.

10. Holder according to one of the claims 7 to 9, **characterized in that** the wedge-shaped groove (14) extends over the diameter of the first coupling portion (12) and divides the first coupling portion (12) at its end into two end portions (15, 16), wherein the rotation-blocking element (7) can be brought into engagement with the groove (14).

11. Holder according to one of the claims 7 to 10, **characterized in that** the two end portions (15, 16) of the first coupling portion (12) are configured asymmetrically, whereby a preferred direction is defined for the insertion of the platform.

12. Method of manufacturing a single-piece platform with a load-receiving area (1) for a weighing object and with a stem (2) arranged parallel to the direction of the load, said stem (2) comprising a centering pin (10), a rotation-blocking element (7) and/or a guide element (9), **characterized in that** a flat blank is produced from a sheet metal material and that a three-dimensional platform is shaped from the blank in a subsequent bending operation.

13. Method according to claim 12, **characterized in that** the blank is produced by laser-cutting, die-punching, or waterjet-cutting.

14. Use of a weighing platform (32), a transfer platform (39), a first holder (36) and a second holder (39) for the platforms in a weighing lift for an electronic balance, wherein each of said platforms comprises a load-receiving area (1), a rotation-blocking element (7) and a centering pin (10), and wherein each of the holders (36, 39) comprises a first coupling portion (12) at its end in which a wedge-shaped groove (14) is formed which serves to position the platform in relation to the load direction, and each of the holders (36, 39) further comprises a body (13) in which a receiving seat (20) is formed for a centering pin (10) of a platform of single-piece construction, **characterized in that** the weighing platform (32), by way of the first holder (36), is in force-transmitting contact with a force-measuring system (38) arranged in the balance, and that the transfer platform (39), by way of the second holder (39), is connected to a transfer device (40) for a weighing object, and that the weighing platform (32) and the transfer platform (39) are configured so that they can pass through each other.

## Revendications

1. Plateforme pour une balance électronique, dans laquelle la plateforme présente un plateau (1) pour des matières à peser, **caractérisée en ce que** la plateforme présente en outre une goupille de centrage (10) et une sécurité anti-torsion (7), laquelle sécurité anti-torsion (7) est disposée entre le plateau (1) et la goupille de centrage (10), dans laquelle la plateforme est fabriquée en un seul tenant à partir d'une tôle métallique est peut être enfichée dans un support substantiellement sans jeu.

2. Plateforme selon la revendication 1, **caractérisée en ce que** la plateforme présente un élément de guidage (9), qui est disposé entre la sécurité anti-torsion (7) et la goupille de centrage (10).

3. Plateforme selon la revendication 2, **caractérisée en ce que** la sécurité anti-torsion (7) présente perpendiculairement à la direction de charge un plus grand allongement que la goupille de centrage (10) et l'élément de guidage (9).

4. Plateforme selon une des revendications 1 à 3, **caractérisée en ce que** le plateau (1) présente au moins deux consoles (3) pour le positionnement multipoints de la matière à peser.

5. Plateforme selon une des revendications 1 à 3, **caractérisée en ce que** le plateau (25,29,30) est conçu pour un appui à plat de la matière à peser.

6. Plateforme selon une des revendications 1 à 5, **caractérisée en ce que** la plateforme présente un métal comme un acier inoxydable antirouille, un métal noble, du titane, de l'aluminium ou une combinaison de ces matériaux.

7. Support pour une plateforme présente un premier emplacement de couplage à position terminale (12) et un corps (13), **caractérisé en ce que** dans le premier emplacement de couplage (12) une rainure cunéiforme (14) pour positionner la plate-forme par rapport à la direction de charge est réalisée et **en ce que** dans le corps (13) un réceptacle (20) destiné à une goupille de centrage (10) d'une plateforme est réalisé, dans lequel la plateforme peut être enfichée substantiellement sans jeu dans le support.

8. Support selon la revendication 7, **caractérisé en ce que** le support présente un deuxième emplacement de couplage à position terminale (37,137) pour relier avec un système de mesure de force (38) disposé dans une balance pour relier avec un dispositif de transfert (40).

9. Support selon une des revendications 7 ou 8, **caractérisé en ce que** le corps (13) et le premier emplacement de couplage (12) présentent un évidement (251) pour recevoir un élément de guidage (9), dans lequel le diamètre de l'évidement (21) correspond substantiellement à l'allongement de l'élément de guidage (9) perpendiculairement à la direction de charge.

10. Support selon une des revendications 7 à 9,**caractérisé en ce que** la rainure cunéiforme (14) s'étend au-dessus du diamètre du premier emplacement de couplage (12) et le premier emplacement de couplage (12) divise en position terminale en deux zones d'extrémité (15,16), dans lequel la sécurité anti-torsion (7) peut être enfichée dans la rainure (14).

11. Support selon une des revendications 7 à 10, **caractérisé en ce que** les deux zones d'extrémité (15,16) du premier emplacement de couplage (12) ont une configuration asymétrique, moyennant quoi une direction d'avance pour enficher la plateforme est déterminée.

12. Procédé de fabrication d'une plateforme en un seul tenant comportant un plateau (1) pour une matière à peser et un mandrin (2) disposé parallèlement à la direction de charge, qui présente une goupille de charge (10), une sécurité anti-torsion (7) et/ou un élément de guidage (9), **caractérisé en ce que** une ébauche plate est produite à partir d'une tôle métallique et à partir de celle-ci une plateforme en trois dimensions est façonnée par un cintrage consécutif.

13. Procédé selon la revendication 12, **caractérisé en ce que** l'ébauche est produite par découpe au laser, découpe à l'emporte pièces ou découpe au jet d'eau.

14. Utilisation d'une plateforme de pesée (32), d'une plateforme de transfert (39), d'un premier support (36) et d'un deuxième support (39) pour les plateformes dans un levage de pesée pour une balance électronique, dans laquelle les plateformes présentent respectivement un plateau (1), une sécurité anti-torsion (7) et une goupille de centrage (10), et dans laquelle les deux supports (36,39) présentent un premier emplacement de couplage à position terminale (12), dans lequel une rainure cunéiforme (14) pour positionner la plateforme par rapport à la direction de charge est réalisée, et un corps (13), dans lequel un réceptacle (20) destiné à une goupille de centrage (10) d'une plateforme en un seul tenant est réalisé, **caractérisée en ce que** la plateforme de pesée (32) est en contact de force par l'intermédiaire du premier support (36) avec un système de mesure de force (38) disposé dans la balance, et **en ce que** la plateforme de transfert (39) est reliée par l'intermédiaire du deuxième support (39) avec un dispositif de transfert (40) d'une matière à peser, et **en ce que** le plateau de pesée (32) et le plateau de transfert (39) sont conçus de manière préhensible l'un par l'autre.
